# FASCICULE DE BREVET EUROPEEN

(11) **EP 3 380 398 B1**
(45) Date de publication et mention de la délivrance du brevet: **15.03.2023**
(21) Numéro de dépôt: 16815600.8
(22) Date de dépôt: 25.11.2016
(51) Int. Cl.: B66C 1/36, B64D 1/22

(54) **DISPOSITIF D'ACCROCHAGE POUR LE LEVAGE DE CHARGES À CLIQUET SÉCURISÉ**
EINHÄNGEVORRICHTUNG ZUM HEBEN VON LASTEN MIT EINER SICHERHEITSRATSCHE
HOOKING DEVICE FOR LIFTING LOADS COMPRISING A SECURE RATCHET

(30) Priorité: 27.11.2015 FR 1561493
(43) Date de publication de la demande: 03.10.2018
(73) Titulaire: LACE, 36250 Saint-Maur (FR)
(72) Inventeur: AUTISSIER, Christophe, 36400 Briantes (FR); MEYNIEL, Guillaume, 36000 Châteauroux (FR)
(74) Mandataire: Ipside
(86) Numéro de dépôt international: PCT/FR2016/053091
(87) Numéro de publication internationale: WO 2017/089722

(56) Documents cités:
- GB-A- 310 213
- US-A- 1 368 647
- US-A- 3 926 467

## Description

La présente invention appartient au domaine du levage et du transport de charges sous élingue.

Plus particulièrement l'invention se rapporte à un dispositif d'accrochage auquel une charge est suspendue par une élingue lors de son levage ou de son transport, en particulier par un hélicoptère.

Il est connu de transporter une charge par air au moyen d'un hélicoptère avec cette charge suspendue par une élingue sous l'hélicoptère.

Une telle solution est fréquente lorsque la charge ne peut pas être logée dans une soute ou qu'il n'est pas souhaité ou possible que l'hélicoptère atterrisse à son point de départ ou d'arrivée.

Dans ce cas l'élingue est accrochée à la structure de l'hélicoptère au moyen d'un dispositif d'accrochage dans lequel est placé une boucle ou un anneau d'extrémité de l'élingue.

Le dispositif d'accrochage est dans cette situation un élément important dans la sécurité des opérations d'accrochage et de transport.

Le dispositif d'accrochage doit en particulier permettre un accrochage rapide et sûr de l'élingue, et doit pouvoir permettre un largage rapide de la charge en cas d'urgence, par exemple une perte de puissance des moteurs de l'hélicoptère, sans que l'anneau de l'élingue engagé dans le crochet du dispositif d'accrochage ne puisse sortir accidentellement en dépit de balancement éventuels de la charge.

Ces aspects de sécurité ont donné lieu à de nombreuses solutions et le crochet, élément ouvert par essence pour y placer la boucle ou l'anneau, est généralement refermé par un cliquet mobile qui s'efface pour placer l'anneau et entend interdire à celui-ci de ressortir sans une action spécifique d'un opérateur.

Dans une solution connue, le cliquet est simplement articulé sur un support du crochet et maintenu contre une face intérieure de l'extrémité du crochet par un ressort. Dans cette configuration, illustrée dans le brevet US 3926467, l'anneau de l'élingue est introduit sur le crochet en poussant sur le cliquet qui s'efface au passage de l'anneau et revient en position lorsque l'anneau est dans la gorge du crochet.

Si dans un tel cas il relativement aisé de fixer l'élingue au dispositif d'accrochage, il y a un risque significatif que lors des mouvements de la charge suspendue, l'anneau arrive à soulever le cliquet et sorte du crochet. Ce phénomène est appelé fréquemment en terminologie anglo-saxonne par l'expression « roll out ».

Pour éviter ce phénomène de décrochement non souhaité, il est connu de supprimer le cliquet et de mettre en oeuvre un mécanisme agissant sur le crochet pour placer l'anneau sur le crochet dans une position ouverte et de refermer le crochet une fois l'anneau en place. Cette solution, qui évite le phénomène de « roll out », conduit cependant à des opérations d'accrochage complexes dans le sens où elles exigent l'usage de deux mains, une main pour ouvrir et pour fermer le crochet et une main pour engager l'anneau sur le crochet, ce qui n'est pas propice à une action rapide et ne permet par de réaliser l'accrochage à distance avec une perche.

Il est également connu de placer un levier de blocage du cliquet pour éviter son ouverture accidentelle. Dans cette solution il est à nouveau nécessaire d'utiliser deux mains pour placer l'anneau et l'accrochage par perche est impossible.

US 1 368 647 A décrit un dispositif selon le préambule de la revendication 1.

Un objectif de la présente invention est de fournir un dispositif d'accrochage comportant un cliquet éliminant le risque de décrochage accidentel de l'élingue tout en permettant la mise en place de l'élingue sur le dispositif d'accrochage avec l'usage d'une seule main ou à l'aide d'une perche.

Pour cela, le dispositif de l'invention pour le levage et le transport d'une charge accrochée par une élingue comporte un crochet, dont une gorge est destinée à recevoir une boucle ou un anneau d'élingue, et comporte un cliquet.

Le cliquet est mobile en rotation autour d'un axe de pivot de cliquet entre une position ouverte dans laquelle une ouverture de la gorge est dégagée et une position fermée dans laquelle l'ouverture de la gorge est obturée.

Le dispositif comporte en outre :
- un verrou comportant une position verrouillée dans laquelle ledit verrou interdit la rotation du cliquet dans la position fermée dudit cliquet, et comportant une position déverrouillée dans laquelle la rotation du cliquet est possible ;
- un levier comportant une position armée dans laquelle ledit levier maintient le verrou dans la position déverrouillée et une position déclenchée dans laquelle ledit levier ne maintient pas ledit verrou qui est entraîné vers la position verrouillée par un ressort de verrou ;
et dans lequel une rotation du cliquet de la position fermée vers la position ouverte actionne le levier depuis la position armée vers la position déclenchée.

Ainsi le dispositif de l'invention permet de sécuriser le transport d'une charge par élingue sous un hélicoptère sans risque de décrochage accidentel de l'élingue.

En outre la mise en oeuvre du dispositif pour y fixer une élingue ne nécessite l'usage que d'une seule main et peut être réalisé sans difficulté à l'aide d'une perche.

Dans des formes de réalisations perfectionnées, le dispositif comporte tout ou partie des caractéristiques suivantes :
- le cliquet comporte une gâche agencée sur ledit cliquet pour permettre l'engagement du pêne dans ladite gâche, dans la position verrouillée dudit cliquet, que lorsque ledit cliquet est dans la position fermée ;
- un ressort de cliquet exerce sur le cliquet une force de rappel vers la position fermée dudit cliquet ;
- dans la position armée, une butée du verrou est en appui sur une surface d'appui du levier pour immobiliser ledit verrou dans la position déverrouillée ;
- le cliquet lorsqu'il pivote autour d'un axe pivot de cliquet entraîne une came qui agit sur une rampe du levier pour déplacer ledit levier de la position armée lorsque le cliquet est en position fermée vers une position déclenchée lorsque le cliquet est pivoté vers la position ouverte ;
- le verrou est monté pivotant de sorte que le pêne est en vis à vis de la gâche lorsque le cliquet est dans la position fermée et de sorte que ledit pêne pénètre dans ladite gâche par un pivotement du verrou autour d'un axe pivot de verrou ;
- dans une forme de réalisation comportant la butée du verrou pour immobiliser le verrou en position déverrouillée et la came qui agit sur une rampe du levier, le levier est monté pivotant de sorte que dans la position armée la butée est en appui sur la surface d'appui lorsque le cliquet est dans la position fermée, et pivote autour d'un axe pivot de levier pour déplacer la surface d'appui et libérer la butée ;
- dans une forme de réalisation particulière, le verrou est monté coulissant de sorte que le pêne est en vis à vis de la gâche du cliquet lorsque ledit cliquet est dans la position fermée et de sorte que ledit pêne pénètre dans ladite gâche par un déplacement suivant une direction de déplacement sensiblement linéaire du verrou ;
- dans une forme de réalisation comportant la butée du verrou pour immobiliser le verrou en position déverrouillée et la came qui agit sur une rampe du levier, le levier est monté coulissant de sorte que dans la position armée la butée est en appui sur la surface d'appui lorsque le cliquet est dans la position fermée, et est déplacé linéairement pour déplacer la surface d'appui et libérer la butée lorsque le cliquet est pivoté vers la position ouverte dudit cliquet ;
- une commande de réarmement est agencée pour déplacer le verrou, lorsque le cliquet est verrouillé, et entraîner le déplacement du levier, sous l'effet d'un ressort de levier, depuis la position déclenchée à la position armée ;
- une structure enveloppe du dispositif comporte deux flasques entre lesquelles flasques sont agencés le crochet, le cliquet, le verrou et le levier ;
- le cliquet présente une surface d'engagement sur laquelle une boucle d'extrémité ou un anneau d'élingue glisse lorsque ladite boucle d'extrémité, ou ledit anneau, est engagée sur un bras du crochet, et fait pivoter le cliquet vers la position ouverte ;
- la position ouverte du cliquet correspond à un pivotement dudit cliquet vers le haut, en position de travail du dispositif, pour permettre un basculement vers le bas du crochet pour libérer l'ouverture de la gorge sans déverrouiller le cliquet ;
- un capteur de la position du verrou transmet une information de position verrouillée et ou de position non verrouillée du cliquet.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- figure 1 : une vue isométrique d'un dispositif d'accrochage suivant un premier mode de réalisation de l'invention avec un anneau d'une élingue engagée sur le crochet du dispositif ;
- figure 2a : une vue isométrique écorchée du dispositif d'accrochage de la figure 1, une flasque latérale étant ôtée pour montrer les éléments du dispositif, avec l'anneau de l'élingue présenté pour être engagée sur le crochet, et dans laquelle le cliquet est descendu dans une position fermée et déverrouillée ;
- figure 2b : une vue de côté dans la configuration illustrée sur la figure 2a ; le détail (a) est un agrandissement partiel de la figure avec le verrou armé ;
- figure 3 :une vue de côté similaire à la vue de la figure 2b mais dans laquelle l'anneau de l'élingue est partiellement engagé sur le crochet et le cliquet partiellement remonté vers une position ouverte ;
- figure 4 : une vue de côté similaire aux vues des figures 2b et 3 dans laquelle l'anneau de l'élingue est engagé en soulevant le crochet et dans lequel le cliquet est soulevé dans une position ouverte non verrouillée et le levier en position déclenchée ;
- figure 5 : une vue de côté similaire aux vues des figures 2b, 3 et 4 dans laquelle l'anneau de l'élingue est complètement engagé sur le crochet et dans lequel le cliquet est descendu dans une position fermée et verrouillée ; le détail (a) est un agrandissement partiel avec le verrou déclenché et le cliquet verrouillé ;
- figures 6a à 6f : une illustration schématique du fonctionnement d'une seconde forme de réalisation de l'invention, les figures représentant une séquence opérationnelle dans laquelle le cliquet est fermé non verrouillé sur la figure 6a, le cliquet est partiellement ouvert sur la figure 6b, le cliquet est totalement ouvert sur la figure 6c, le cliquet est en cours de fermeture et de verrouillage sur la figure 6d, le cliquet est fermé verrouillé sur la figure6e, le cliquet fermé est en cours de déverrouillage sur la figure 6f.

Le dispositif d'accrochage de la présente invention est un dispositif pouvant être mis en oeuvre notamment pour le transport et le largage de charges par hélicoptère.

Dans la description il sera utilisé indifféremment l'expression « boucle d'élingue » ou le terme « anneau » pour désigner la partie terminale d'une élingue supportant une charge venant s'engager dans le dispositif, indépendamment de la forme de cette partie terminale.

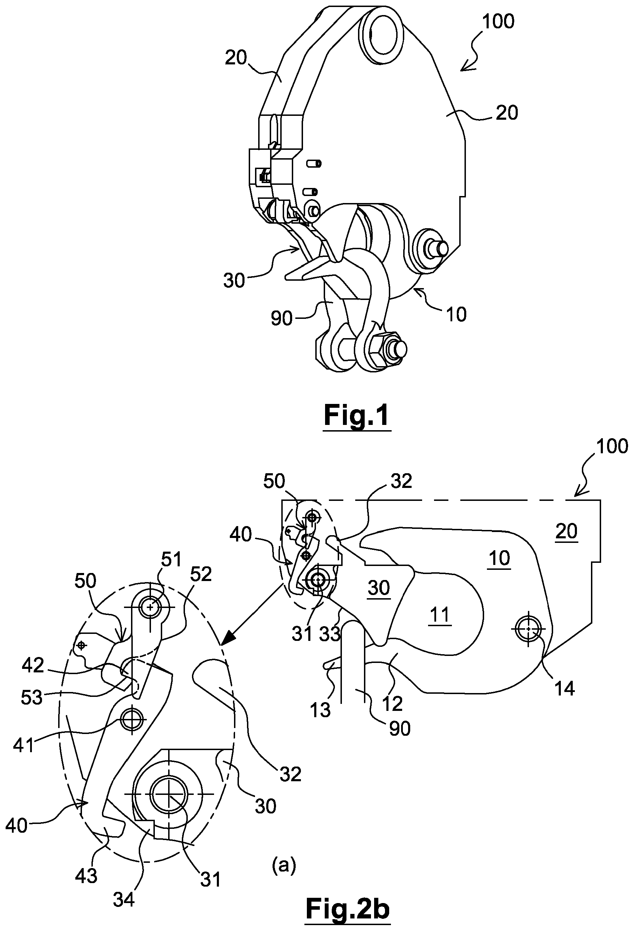

Le dispositif 100 d'accrochage de la figure 1 et des figures 2a, 2b et 3 à 5 comporte principalement :
- un crochet 10 dans une gorge 11 duquel crochet vient s'engager un anneau 90, une manille dans l'exemple illustré, d'une élingue destinée à porter la charge, non représentée, devant être transportée ;
- un cliquet 30 de fermeture d'une ouverture de la gorge 11 ;
- une cage comportant principalement deux flasques latérales 20 maintenues écartées et fixes entre elles par un ensemble de boulons et d'entretoises, non représentés, entre lesquelles flaques latérales sont agencés le crochet 10 et le cliquet 30.

Sur la figure 1 l'anneau 90 est engagé dans la gorge 11 du crochet 10.

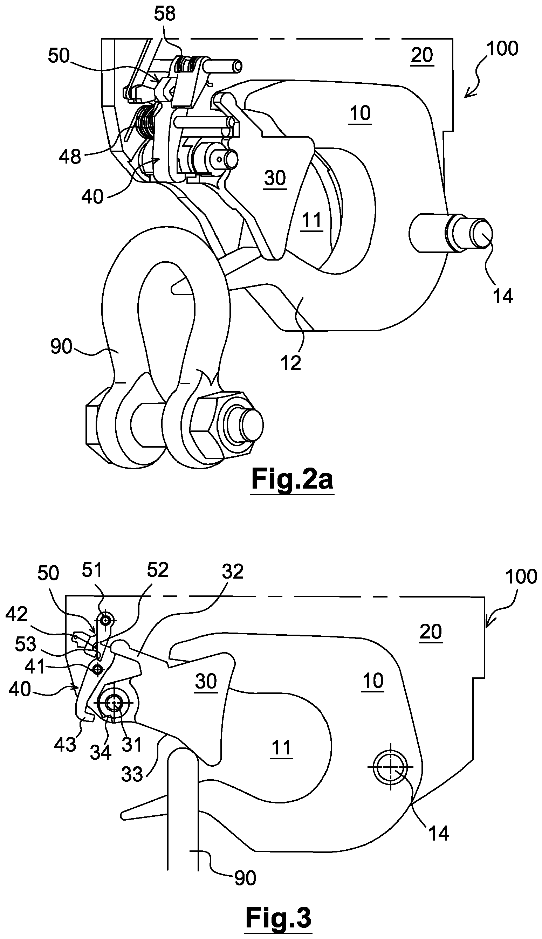

La figure 2a représente en vue isométrique, et la figure 2b en vue de profil, le dispositif 100, une flasque latérale étant retirée pour montrer l'agencement des composants du dispositif situés entre les flasques latérales.

Les flasques latérales 20 maintiennent des axes pivots des différents composants mobiles en rotation entre lesdites flasques latérales, lesdits axes pivots étant perpendiculaires à un plan axial du dispositif 100 sensiblement parallèle aux flasques latérales.

Ainsi le crochet 10 est mobile en rotation autour d'un axe pivot de crochet 14. Ledit axe pivot de crochet permet une rotation du crochet 10 lorsque la charge doit être libérée, ce qui est réalisé par un déverrouillage de la rotation dudit crochet. La manière dont est réalisé, et les composants qui assurent, le verrouillage du crochet 10 pendant le transport d'une charge et son déverrouillage pour le largage de ladite charge ne sont pas représentés et ne sont pas décrits dans la présente demande qui s'attache plus particulièrement au cliquet 30 et à des moyens de sécurisation du fonctionnement dudit cliquet.

Le cliquet 30, articulé autour d'un axe pivot de cliquet 31 présente en vue de profil une forme de secteur angulaire. Le cliquet est ramené dans une position fermée, position illustrée sur la figure 1, par un ressort de cliquet non représenté sur les figures.

De manière connue, l'axe pivot de cliquet 31 est situé d'un côté ouvert de la gorge 11 et le cliquet 30 est de dimensions telles que dans la position fermée, il obture l'ouverture de ladite gorge et que dans une position ouverte il dégage un passage de l'ouverture de la gorge adaptée à la mise en place de l'anneau 90 de l'élingue sur un bras 12 du crochet, lorsque le crochet est dans la position dans laquelle il doit porter une charge.

Il doit être remarqué que dans l'exemple de réalisation et compte tenu d'une forme relativement enveloppante du crochet 10, le cliquet est conformé pour permettre le basculement vers le bas du crochet, basculement nécessaire lors du largage de la charge et qui libère l'ouverture de la gorge 11 de l'entrave formée par le cliquet 30 dans la position de transport de la charge.

Le dispositif 100 comporte également, entre les flasques 20, un verrou 40 et un levier 50 mis en oeuvre pour verrouiller la position fermée du cliquet 30.

Le verrou 40 est monté articulé autour d'un axe pivot de verrou 41.

A une première extrémité, située par rapport à l'axe pivot de verrou du côté où se situe l'axe pivot de cliquet 31, le verrou comporte un pêne 43.

Dans une position déverrouillée, illustrée sur la figure 2b, le verrou est basculé autour l'axe pivot de verrou 41 de sorte que le pêne 43 est dégagé d'une gâche 34 du cliquet 30. Le cliquet 30 est alors seulement maintenu en position par le ressort de cliquet, et peut être ouvert par une force exercée sur le cliquet suffisante pour vaincre la force produite par ledit ressort de cliquet.

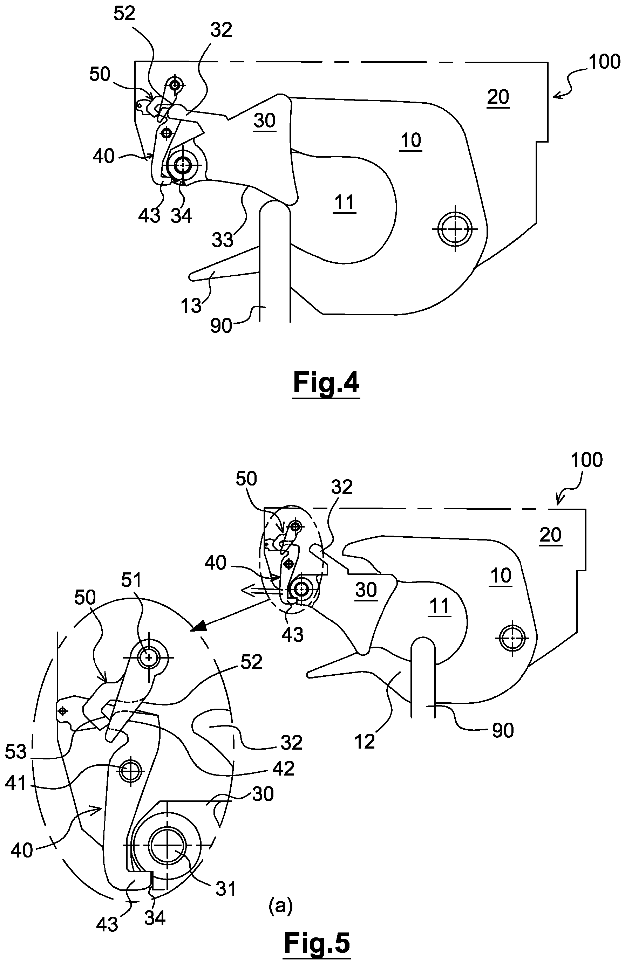

Cette configuration fermée non verrouillée du cliquet est en opposition avec une configuration fermée verrouillée du cliquet 30 représentée sur la figure 5.

Dans la position fermée verrouillée, le pêne 43 est engagé dans la gâche 34 du cliquet 30, et le verrou 40 interdit la rotation du cliquet autour de l'axe pivot de cliquet 31.

Pour assurer la position fermée verrouillée du cliquet 30, le verrou 40 est lui même poussé vers la position verrouillée par un ressort de verrou 48.

A une seconde extrémité, le verrou 40 comporte une butée de verrou 42.

Le levier 50 est articulé autour d'un axe pivot de levier 51.

Le levier 50 comporte une surface d'appui 53 destinée à accueillir la butée de verrou 42 lorsque le verrou 40 est dans une position déverrouillée, figure 2b, et à interdire le basculement du verrou dans la position verrouillée, figure 5.

Le levier 50 comporte également une rampe 52 agencée pour interagir avec une came 32 du cliquet 30. Le levier est ramené en direction de la came 32 par un ressort de levier 58, représenté en figure 2a.

Lorsque le levier 50 est libre de pivoter autour de l'axe pivot de levier 51, ledit levier pivote en direction de la came 32. Ainsi, lorsque le cliquet 30 est en position fermée, le levier 50 est dans une position dans laquelle la butée de verrou 42 est en appui sur la surface d'appui 53, ou est en mesure de se placer dans cette position. Lorsque le cliquet 30 est dans une position ouverte, en pratique considérée ouverte lorsque le passage d'un anneau 90 est possible, le levier 50, repoussé par la came 32 agissant sur la rampe 52, est déplacé de sorte que la butée de verrou 42 ne puisse plus venir sur la surface d'appui 53.

Les principes du cliquet du dispositif sécurisé seront mieux compris à la description du fonctionnement dudit cliquet tel qu'il est décomposé sur les figures 2b, 3, 4 et 5.

Sur la figure 2b, le cliquet 30 est dans une position fermée et non verrouillée correspondant à une position armée du levier 50 et du dispositif.

Dans cette position le verrou 40 est maintenu déverrouillé par la butée de verrou 42 venant en appui sur la surface d'appui 53 du levier qui interdit au verrou de basculer et, en conséquence, au pêne 43 de s'engager dans la gâche 34 du cliquet.

Cette position armée du levier 50 est possible compte tenu de la position relative de la rampe 52 du levier et de la came 30 du cliquet dans laquelle position ladite came n'est pas en appui sur la dite rampe.

Sur la figure 2b, l'anneau 90 est présenté devant l'ouverture du crochet 10.

Dans cette position du verrou 40, il est possible de faire pivoter le cliquet, non verrouillé, en contrant la force du ressort de cliquet qui ramène ledit cliquet vers la position fermée. Sur la figure 3, le cliquet 30 est dans une position partiellement ouverte, ledit cliquet étant soulevé du seul fait de l'introduction de la boucle d'élingue 90 qui est poussée sur une lèvre 13 du crochet 10. Dans le mouvement de rotation du cliquet 30 qui en résulte, la came 32 se rapproche de la rampe 52 du levier 50, sans toutefois dans cette position intermédiaire agir sur ladite rampe.

Sur la figure 4, le cliquet 30 est dans une position partiellement ouverte ou ouverte, ledit cliquet étant soulevé par l'introduction de la boucle d'élingue 90 au-delà de la position illustrée sur la figure 3. Le mouvement de rotation du cliquet 30 qui en résulte est, dans cette position, suffisant pour que la came 32 agisse sur la rampe 52 et repousse le levier 50 qui libère le verrou 40.

Dans cette position du cliquet, le pêne 43 n'est pas engagé dans la gâche 34 qui n'est pas positionnée en vis à vis du pêne, situation qui ne se produit que lorsque le cliquet est en position fermée.

On remarque, comme illustré sur la figure 4, que par le pivotement du verrou 40, la surface d'appui 53 du levier 50 ne peut plus venir se placer sous la butée 42 du verrou.

Sur la figure 5 l'anneau 90 est engagé dans la gorge 11 du crochet et le cliquet 30 est revenu en position fermée sous l'effet du ressort de cliquet.

En outre, malgré le retrait de la came 32 qui n'est plus en appui sur la rampe 52, le levier n'a pas repris la position initiale, laissant le verrou 40 libre de pivoter sous l'effet du ressort de verrou 48. Le pêne 43 du verrou est engagé dans la gâche 34 qui s'est retrouvé en vis à vis du pêne lors du pivotement du cliquet lorsque le cliquet est revenu dans la position fermée.

Sur la figure 5, le cliquet est donc fermé et verrouillé, avec l'anneau 90 placé dans la gorge 11 où il est maintenu par le cliquet verrouillé.

Le cliquet 30 étant verrouillé dans la position fermée, il n'est plus possible à la boucle ou à l'anneau de l'élingue de se dégager accidentellement du dispositif quelques soient les mouvements de la charge.

Le phénomène de « roll out » est ainsi évité.

Lorsque le dispositif est dans la configuration illustrée sur la figure 5, avec le cliquet fermé et verrouillé, il est possible de revenir à la situation fermée et déverrouillé des figures 2a et 2b en réarmant le dispositif.

Pour cela il suffit de pivoter le verrou comme l'indique la flèche sur la figure 5, c'est-à-dire pour sortir le pêne de la gâche.

Ce mouvement a pour effet de déverrouiller le cliquet, et permet au levier 50 de pivoter, sous l'effet du ressort de levier 58, de sorte à replacer la surface d'appui 53 sous la butée 42 du verrou et ainsi interdire le verrouillage du cliquet tant que la came 32 n'aura pas repoussé le levier 50.

Le réarmement peut être réalisé au moyen d'une commande mécanique telle qu'un levier de réarmement accessible à un opérateur sur le dispositif ou encore par une commande électrique au moyen d'un actionneur, par exemple un électroaimant, solution non représentée, qui peut être commandé à distance par un opérateur situé dans l'hélicoptère par exemple.

Dans une forme de réalisation non illustrée, le dispositif est pourvu d'un indicateur de verrouillage qui permet de s'assurer que le cliquet est effectivement verrouillé et pas seulement fermé comme l'indiquerait sa position visible.

Un tel indicateur de verrouillage comporte par exemple un témoin visuel coloré, par exemple en rouge ou en une autre couleur caractéristique, qui est actionné par le verrou 40 et qui n'est visible sur une face du dispositif que lorsque le pêne 43 est engagé dans la gâche 34. Le témoin peut être visible par une fenêtre aménagée dans une flasque ou une autre zone du dispositif, ou comporter un élément mobile qui est saillant et visible sur une surface du dispositif si le pêne n'est pas engagé dans la gâche et qui est escamoté et invisible dans le cas contraire, ou inversement.

De manière alternative ou complémentaire un capteur de position du pêne est agencé dans le dispositif pour retransmettre un signal de verrouillage vers un opérateur au sol ou dans l'hélicoptère. Le signal peut être transmis par tout type de liaison filaire ou non filaire compatible avec les conditions opératoires du dispositif.

Dans une forme de transmission sans fil le capteur de position alimente un voyant lumineux placé sur le dispositif par exemple pour avertir un opérateur lorsque le cliquet n'est pas verrouillé.

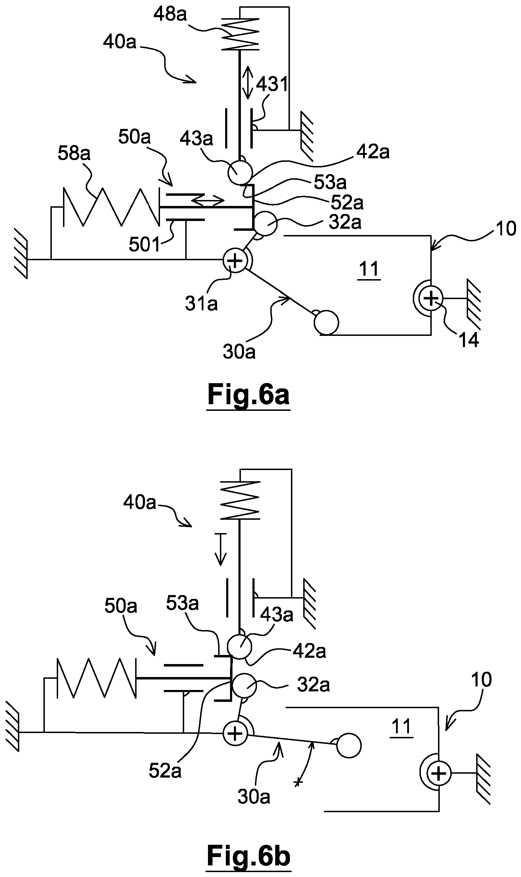

Les figures 6a à 6f illustrent de manière schématique le fonctionnement d'un dispositif 100 suivant une autre forme de réalisation de l'invention.

Dans ce deuxième exemple de réalisation, le verrou 40a et le levier 50a réalisent les mêmes fonctions, réciproquement, que le verrou 40 et le levier 50 dans la forme de réalisation précédente. De manière générale l'indice (a) apposée à un repère des dessins dans ce second mode de réalisation renvoi à un élément ayant la même fonction que l'élément portant le même repère sans indice dans le premier mode de réalisation.

Dans ce deuxième exemple le pêne 43a est actionné par un mouvement linéaire du verrou 40a et la surface d'appui 53a de la butée 42a est également déplacée par un mouvement linéaire du levier 50a. Avantageusement des glissières ou des guides 431, 501 assurent le guidage des éléments à déplacements linéaires.

En reprenant la description du fonctionnement de l'exemple précédent :
- figure 6a : le cliquet 30a est fermé et déverrouillé dans une position armée du dispositif. Le pêne 43a du verrou 40a est en appui par la butée 42a, formée à une extrémité dudit pêne, sur la surface d'appui 53a du levier 50a qui interdit au pêne de bloquer le pivotement du cliquet 30a autour de l'axe de cliquet 31a . Le cliquet 30a, maintenu dans une position fermée par une pression exercée par un élément élastique 54a repoussant la came 32a par la mise en appui d'une surface de la rampe 52a du levier 50a, est donc libre de s'ouvrir ;

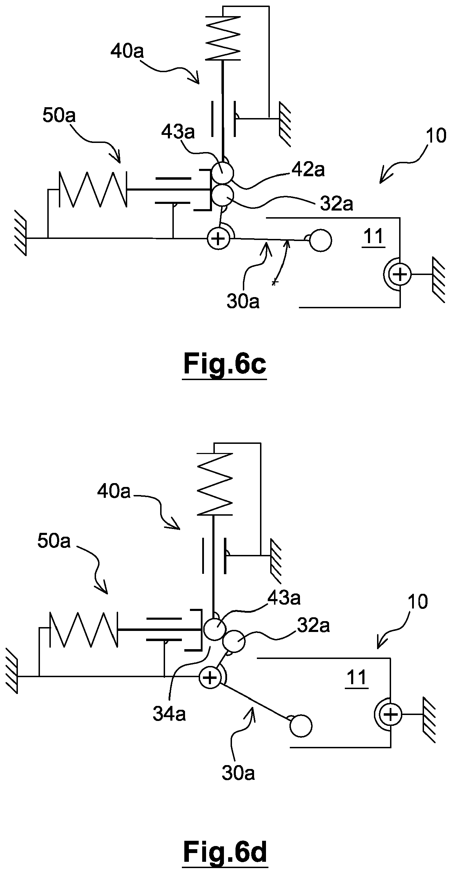

- figures 6b et 6c : le cliquet 30 est ouvert (la boucle de l'élingue n'est pas représentée) partiellement sur la figure 6b et le levier 50a dans une position déclenchée sur la figure 6c. Sous l'effet de l'ouverture forcée du cliquet, la came 32a repousse le levier 50a en prenant appui sur la rampe 52a de sorte que la surface d'appui 53a dudit levier s'efface et que le pêne 43a, déplacé sous l'effet du ressort de verrou 48a, n'est plus maintenu en position déverrouillé que par une surface de la came 32a du cliquet 30 ;

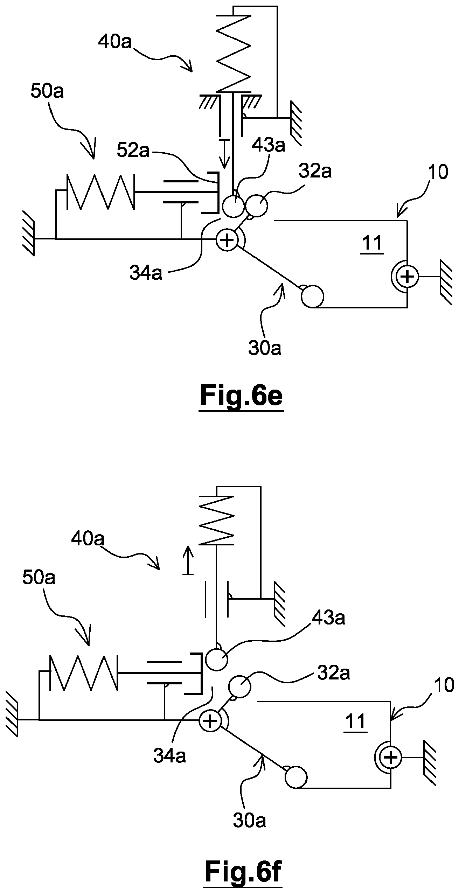

- figures 6e et 6d : le cliquet 30a, lorsque la boucle d'élingue non représentée est dans le crochet 10, est revenu en position fermée, partiellement sur la figure 6d. Lors du retour vers la position fermée du cliquet, le pêne 43a est poussé, sous l'effet du ressort de verrou 48a, dans la gâche 34a ce qui a pour effet de verrouiller le cliquet et de sécuriser sa fermeture. Dans cette forme de réalisation, la gâche du cliquet correspond à un espace formé entre la came 32a et la rampe 52a dans lequel espace se met en position une extrémité du pêne 43a, figure 6e.

Dans cette forme de réalisation, le dispositif est réarmé en soulevant le verrou 40a, sens de la flèche sur la figure 6f, ce qui permet au levier 50a de reprendre la position initiale de la figure 6a lorsque la butée 42a se trouve à nouveau dans une position où elle peut prendre appui sur la surface d'appui 53a revenue dans la position initiale sous l'effet du ressort de levier 58a.

L'invention n'est pas limitée aux modes de réalisations qui viennent d'être décrits.

En particulier les deux modes exposés peuvent être combinés, par exemple en combinant un verrou pivotant avec un levier coulissant ou en combinant un verrou coulissant avec un levier pivotant.

L'homme du métier pourra de manière générale mettre en oeuvre d'autres formes de verrou et de levier pour autant que, conformément à l'invention, dans une position armée du levier le cliquet peut être pivoté librement et que dans une position déclenchée du levier, le déclenchement étant réalisé par un pivotement du cliquet vers la position ouverte du cliquet, le verrou immobilise et verrouille le cliquet lors de son retour dans la position fermée.

En particulier les exemples décrits mettent en oeuvre des transmissions de mouvements directes, mais il est également possible de mettre en oeuvre des transmissions comportant des pièces mobiles intermédiaires telles que des cames, des biellettes, des engrenages... pour obtenir les mouvements et les effets recherchés entre le cliquet, le verrou et le levier.

Ainsi l'invention permet de réaliser un dispositif sécurisé de transport de charge par élingue sous un hélicoptère sans risque de décrochage accidentel de l'élingue.

En outre la mise en oeuvre du dispositif pour y fixer une élingue ne nécessite l'usage que d'une seule main et peut être réalisé sans difficulté à l'aide d'une perche.

## Revendications

1. - Dispositif (100) pour le levage et le transport d'une charge accrochée par une élingue comportant un crochet (10), dont une gorge (11) est destinée à recevoir une boucle (90) ou un anneau d'élingue, et comportant un cliquet (30, 30a) mobile en rotation autour d'un axe de pivot de cliquet (31, 31a) entre une position ouverte dans laquelle une ouverture de la gorge (11) est dégagée et une position fermée dans laquelle ladite ouverture de la gorge est obturée, ledit dispositif comportant :
- un verrou (40, 40a) comportant une position verrouillée dans laquelle ledit verrou interdit la rotation du cliquet (30) dans la position fermée dudit cliquet, et comportant une position déverrouillée dans laquelle la rotation du cliquet est possible ;
- un levier (50, 50a) comportant une position armée dans laquelle ledit levier maintient le verrou (40, 40a) dans la position déverrouillée et une position déclenchée dans laquelle ledit levier ne maintient pas ledit verrou qui est entraîné vers la position verrouillée par un ressort de verrou (48, 48a) ;
et étant **caractérisé en ce qu'**une rotation du cliquet (30) de la position fermée vers la position ouverte actionne le levier (50, 50a) depuis la position armée vers la position déclenchée.

2. - Dispositif suivant la revendication 1 dans lequel le cliquet (30, 30a) comporte une gâche (34, 34a) agencée sur ledit cliquet pour permettre l'engagement du pêne (43, 43a) dans ladite gâche, dans la position verrouillée dudit cliquet, que lorsque ledit cliquet est dans la position fermée.

3. - Dispositif suivant la revendication 1 ou la revendication 2 dans lequel un ressort de cliquet exerce sur le cliquet (30) une force de rappel vers la position fermée dudit cliquet.

4. - Dispositif suivant l'une des revendications précédentes dans lequel, dans la position armée, une butée (42, 42a) du verrou (40, 40a) est en appui sur une surface d'appui (53, 53a) du levier (50, 50a) pour immobiliser ledit verrou dans la position déverrouillée.

5. - Dispositif suivant l'une des revendications précédentes dans lequel le cliquet (30, 30a) lorsqu'il pivote autour d'un axe pivot de cliquet (31, 31a) entraîne une came (32, 32a) qui agit sur une rampe (52, 52a) du levier (50, 50a) pour déplacer ledit levier de la position armée lorsque le cliquet est en position fermée vers une position déclenchée lorsque le cliquet est pivoté vers la position ouverte.

6. - Dispositif suivant l'une des revendications précédentes dans lequel le verrou (40) est monté pivotant de sorte que le pêne (43) est en vis à vis de la gâche (34) lorsque le cliquet (30) est dans la position fermée et de sorte que le dit pêne pénètre dans ladite gâche par un pivotement du verrou autour d'un axe pivot de verrou (41).

7. - Dispositif suivant l'une des revendications précédentes prise en combinaison avec la revendication 4 et la revendication 5 dans lequel le levier (50) est monté pivotant de sorte que dans la position armée la butée (42) est en appui sur la surface d'appui (53) lorsque le cliquet (30) est dans la position fermée, et pivote autour d'un axe pivot de levier (51) pour déplacer la surface d'appui (53) et libérer la butée (42).

8. - Dispositif suivant l'une des revendications 1 à 5 dans lequel le verrou (40a) est monté coulissant de sorte que le pêne (43a) est en vis à vis de la gâche (34a) du cliquet (30) lorsque ledit cliquet est dans la position fermée et de sorte que ledit pêne pénètre dans ladite gâche par un déplacement suivant une direction de déplacement sensiblement linéaire du verrou (40a).

9. - Dispositif suivant l'une des revendications précédentes en combinaison avec la revendication 4 et la revendication 5 dans lequel le levier (50a) est monté coulissant de sorte que dans la position armée la butée (42a) est en appui sur la surface d'appui (53a) lorsque le cliquet (30a) est dans la position fermée, et est déplacé linéairement pour déplacer la surface d'appui (53a) et libérer la butée (42a) lorsque le cliquet (30a) est pivoté vers la position ouverte dudit cliquet.

10. - Dispositif suivant l'une des revendications précédentes dans lequel une commande de réarmement (44) est agencée pour déplacer le verrou (40, 40a), lorsque le cliquet (30, 30a) est verrouillé, et entraîner le déplacement du levier (50, 50a), sous l'effet d'un ressort de levier (54a), depuis la position déclenchée à la position armée.

11. - Dispositif suivant l'une des revendications précédentes dans lequel une structure enveloppe du dispositif comporte deux flasques (20) entre lesquelles flasques sont agencés le crochet (10), le cliquet (30, 30a), le verrou (40, 40a) et le levier (50, 50a).

12. - Dispositif suivant l'une des revendications précédentes dans lequel le cliquet (30, 30a) présente une surface d'engagement (33) sur laquelle une boucle d'extrémité (90) ou un anneau d'élingue glisse lorsque ladite boucle d'extrémité, ou ledit anneau, est engagée sur un bras (12) du crochet (10), et fait pivoter le cliquet (30, 30a) vers la position ouverte.

13. - Dispositif suivant l'une des revendications précédentes dans lequel la position ouverte du cliquet (30, 30a) correspond à un pivotement dudit cliquet vers le haut, en position de travail du dispositif, pour permettre un basculement vers le bas du crochet (10) pour libérer l'ouverture de la gorge (11) sans déverrouiller le cliquet (30, 30a).

14. - Dispositif suivant l'une des revendications précédentes dans lequel un capteur de la position du verrou (40, 40a) transmet une information de position verrouillée et ou de position non verrouillée du cliquet (30, 30a).

## Patentansprüche

1. Vorrichtung (100) zum Anheben und Transportieren einer Last, die durch eine Schlinge befestigt ist, umfassend einen Haken (10), dessen Kehle (11) dazu bestimmt ist, eine Öse (90) oder einen Schlingenring aufzunehmen, und umfassend eine Sperrklinke (30, 30a), die um eine Sperrklinkendrehachse (31, 31a) drehbar zwischen einer offenen Position, in der eine Öffnung der Kehle (11) frei ist, und einer geschlossenen Position, in der die Öffnung der Kehle verschlossen ist, wobei die Vorrichtung Folgendes umfasst:
- ein Schloss (40, 40a) eine verriegelte Position umfassend, in der das Schloss eine Drehung der Sperrklinke (30) in der geschlossenen Position der Sperrklinke verhindert, und mit einer entriegelten Position, in der eine Drehung der Sperrklinke möglich ist;
- einen Hebel (50, 50a) eine gespannte Position umfassend, in der der Hebel das Schloss (40, 40a) in der entriegelten Position hält, und einer gelösten Position, wobei der Hebel das Schloss nicht hält, die durch eine Riegelfeder (48, 48a) in Richtung der verriegelten Position getrieben wird;
und **dadurch gekennzeichnet ist, dass** eine Drehung der Sperrklinke (30) von der geschlossenen Position in Richtung der offenen Position den Hebel (50, 50a) von der gespannten Position in die gelöste Position betätigt.

2. Vorrichtung nach Anspruch 1, wobei die Sperrklinke (30, 30a) ein an der Sperrklinke angeordnetes Schließblech (34, 34a) aufweist, um den Eingriff des Riegels (43, 43a) in das Schließblech in der verriegelten Position der Sperrklinke zu ermöglichen, nur wenn sich die Sperrklinke in der geschlossenen Position befindet.

3. Vorrichtung nach Anspruch 1 oder Anspruch 2, wobei eine Sperrklinkenfeder auf die Sperrklinke (30) eine Rückstellkraft in Richtung der geschlossenen Position der Sperrklinke ausübt.

4. Vorrichtung nach einem der vorhergehenden Ansprüche, wobei ein Widerlager (42, 42a) des Schlosses (40, 40a) in gespannter Position auf einer Anlagefläche (53, 53a) des Hebels (50, 50a) aufliegt, um das Schloss in der entriegelten Position zu immobilisieren.

5. Vorrichtung nach einem der vorhergehenden Ansprüche, wobei die Sperrklinke (30, 30a) beim Schwenken um eine Sperrklinkenschwenkachse (31, 31a) einen Nocken (32, 32a) antreibt, der auf eine Rampe (52, 52a) des Hebels (50, 50a) wirkt, um den Hebel aus der gespannten Position, wenn sich die Sperrklinke in der geschlossenen Position befindet, in Richtung einer gelösten Position, wenn die Sperrklinke in Richtung der offenen Position geschwenkt wird, zu bewegen.

6. Vorrichtung nach einem der vorangehenden Ansprüche, wobei das Schloss (40) schwenkbar gelagert ist, so dass der Riegel (43) dem Schließblech (34) gegenüberliegt, wenn sich die Sperrklinke (30) in der geschlossenen Position befindet, und so dass der Riegel durch Schwenken des Schlosses um eine Schlossschwenkachse (41) in das Schließblech gelangt.

7. Vorrichtung nach einem der vorhergehenden Ansprüche in Kombination mit Anspruch 4 und Anspruch 5, wobei der Hebel (50) schwenkbar gelagert ist, so dass in der gespannten Position das Widerlager (42) an der Anlagefläche (53) anliegt, wenn die Sperrklinke (30) sich in der geschlossenen Position befindet, und um eine Hebelschwenkachse (51) schwenkt, um die Anlagefläche (53) zu bewegen und das Widerlager (42) freizugeben.

8. Vorrichtung nach einem der Ansprüche 1 bis 5, wobei das Schloss (40a) gleitbar gelagert ist, so dass der Riegel (43a) dem Schließblech (34a) der Sperrklinke (30) gegenüberliegt, wenn sich die Sperrklinke in der geschlossenen Position befindet, und so dass der Riegel durch eine Bewegung entlang einer Richtung einer im Wesentlichen linearen Bewegung des Schlosses (40a) in das Schließblech gelangt.

9. Vorrichtung nach einem der vorhergehenden Ansprüche in Kombination mit Anspruch 4 und Anspruch 5, wobei der Hebel (50a) gleitbar gelagert ist, so dass das Widerlager (42a) in der gespannten Position an der Anlagefläche (53a) anliegt, wenn die Sperrklinke (30a) sich in der geschlossenen Position befindet, und linear bewegt wird, um die Anlagefläche (53a) zu bewegen und das Widerlager (42a) freizugeben, wenn die Sperrklinke (30a) in Richtung der offenen Position der Sperrklinke geschwenkt wird.

10. Vorrichtung nach einem der vorhergehenden Ansprüche, wobei eine Rückstellsteuerung (44) angeordnet ist, um das Schloss (40, 40a) zu bewegen, wenn die Sperrklinke (30, 30a) verriegelt ist, und die Bewegung des Hebels (50, 50a) voranzutreiben, unter der Wirkung einer Hebelfeder (54a) von der gelösten Position in die gespannte Position.

11. Vorrichtung nach einem der vorhergehenden Ansprüche, wobei eine Hüllstruktur der Vorrichtung zwei Flansche (20) umfasst, zwischen denen der Haken (10), die Sperrklinke (30, 30a), das Schloss (40, 40a) und der Hebel (50, 50a) angeordnet sind.

12. Vorrichtung nach einem der vorhergehenden Ansprüche, wobei die Sperrklinke (30, 30a) eine Eingriffsfläche (33) aufweist, auf der eine Endöse (90) oder ein Schlingenring gleitet, wenn die Endöse oder der Ring auf den Arm (12) des Hakens (10) eingreifen und die Sperrklinke (30, 30a) in die offene Position schwenken.

13. Vorrichtung nach einem der vorhergehenden Ansprüche, wobei die offene Position der Sperrklinke (30, 30a) einem Schwenken der Sperrklinke nach oben in der Arbeitsposition der Vorrichtung entspricht, um ein Abwärtskippen des Hakens (10) zu ermöglichen, um die Öffnung der Kehle (11) freizugeben, ohne die Sperrklinke (30, 30a) zu entriegeln.

14. Vorrichtung nach einem der vorhergehenden Ansprüche, wobei ein Positionssensor des Schlosses (40, 40a) eine Information über die verriegelte Position und oder die entriegelte Position der Sperrklinke (30, 30a) überträgt.

## Claims

1. A device (100) for lifting and transporting a load attached by a sling including a hook (10), one groove (11) of which is intended to receive a loop (90) or a sling ring, and including a pawl (30, 30a) which is movable in rotation about a pawl pivot axis (31, 31a) between an open position in which an opening of the groove (11) is unobstructed and a closed position in which said opening of the groove is sealed, said device including:
- a lock (40, 40a) including a locked position in which said lock prohibits the rotation of the pawl (30) in the closed position of said pawl, and including an unlocked position in which the rotation of the pawl is possible:
- a lever (50, 50a) including a cocked position in which said lever holds the lock (40, 40a) in the unlocked position and a tripped position in which said lever does not hold said lock which is driven to the locked position by a lock spring (48, 48a);
and being **characterised in that** a rotation of the pawl (30) from the closed position to the open position actuates the lever (50, 50a) from the cocked position to the tripped position.

2. The device according to claim 1 wherein the lock (30, 30a) includes a striker (34, 34a) arranged on said pawl to allow the engagement of the bolt (43, 43a) in said striker, in the locked position of said pawl, only when said pawl is in the closed position.

3. The device according to claim 1 or claim 2 wherein a pawl spring exerts a return force on the pawl (30) towards the closed position of said pawl.

4. The device according to one of the preceding claims wherein, in the cocked position, a stop (42, 42a) of the lock (40, 40a) bears on a bearing surface (53, 53a) of the lever (50, 50a) to immobilise said lock in the unlocked position.

5. The device according to one of the preceding claims wherein the pawl (30, 30a) when it pivots about a pawl pivot axis (31, 31a) drives a cam (32, 32a) which acts on a ramp (52, 52a) of the lever (50, 50a) to displace said lever from the cocked position when the pawl is in the closed position to a tripped position when the pawl is pivoted to the open position.

6. The device according to one of the preceding claims wherein the lock (40) is pivotally mounted such that the bolt (43) is opposite to the striker (34) when the pawl (30) is in the closed position and such that said bolt enters said striker by pivoting the bolt about a lock pivot axis (41).

7. The device according to one of the preceding claims taken in combination with claim 4 and claim 5 wherein the lever (50) is pivotally mounted such that, in the cocked position, the stop (42) bears on the bearing surface (53) when the pawl (30) is in the closed position and pivots about a lever pivot axis (51) to displace the bearing surface (53) and release the stop (42).

8. The device according to one of claims 1 to 5 wherein the lock (40a) is slidably mounted such that the bolt (43a) is opposite the striker (34a) of the pawl (30) when said pawl is in the closed position and such that said bolt enters said striker by a displacement in a direction of substantially linear displacement of the lock (40a).

9. The device according to one of the preceding claims in combination with claim 4 and claim 5 wherein the lever (50a) is slidably mounted such that, in the cocked position, the stop (42a) bears on the bearing surface (53a) when the pawl (30a) is in the closed position, and is displaced linearly to displace the bearing surface (53a) and release the stop (42a) when the pawl (30a) is pivoted towards the open position of said pawl.

10. The device according to one of the preceding claims wherein a reset control (44) is arranged to displace the lock (40, 40a), when the pawl (30, 30a) is locked, and cause the displacement of the lever (50, 50a), under the effect of a lever spring (54a), from the tripped position to the cocked position.

11. The device according to one of the preceding claims wherein an envelope structure of the device includes two flanges (20) between which flanges, the hook (10), the pawl (30, 30a), the lock (40, 40a) and the lever (50, 50a) are arranged.

12. The device according to one of the preceding claims wherein the pawl (30, 30a) has an engagement surface (33) on which an end loop (90) or a sling ring slides when said end loop, or said ring, is engaged on an arm (12) of the hook (10), and causes the pawl (30, 30a) to pivot towards the open position.

13. The device according to one of the preceding claims wherein the open position of the pawl (30, 30a) corresponds to a pivoting of said pawl upwards, in the working position of the device, to allow a downward tilting of the hook (10) to release the opening of the groove (11) without unlocking the pawl (30, 30a).

14. The device according to one of the preceding claims wherein a sensor of the position of the lock (40, 40a) transmits locked position and/or unlocked position information of the pawl (30, 30a).
